# EUROPEAN PATENT APPLICATION

(11) **EP 4 672 004 A1**
(43) Date of publication of application: **31.12.2025**
(21) Application number: 25153325.3
(22) Date of filing: 22.01.2025
(51) Int. Cl.: G06F 13/12, G06F 13/40, G06F 13/42, G06N 20/00, H04L 12/46, H04L 49/109, H04L 49/351, H04L 45/00, H04L 45/24, G06F 11/20

(54) **METHOD AND DEVICE FOR INTERCONNECTING GPUS OF SERVERS, A SERVER, AND A STORAGE MEDIUM**

(30) Priority: 24.06.2024 CN 202410823668
(71) Applicant: NEW H3C AI TECHNOLOGIES CO., LTD., Hangzhou, Zhejiang 311258 (CN)
(72) Inventor: WANG, Xinxin, Beijing 100102 (CN)
(74) Representative: 2SPL Patentanwälte PartG mbB

(57) **Abstract**

Disclosed are a graphics processing units, GPUs (101-108), interconnection method, device, and a storage medium. The device is applied to a server comprising two or more GPUs (101-108) interconnected with each other by an Ethernet switching chip (201, 202) to establish Ethernet connections, so that in the server, a source GPU (101-108) may determine that data needs to be transmitted to a target GPU (101-108), encapsulates the data to be transmitted based on a standard Ethernet protocol and obtains an Ethernet packet. The source GPU (101-108) sends the Ethernet packet to the Ethernet switching chip (201, 202); then the Ethernet switching chip (201, 202) sends the Ethernet packet to a designated connector. The designated connector sends the Ethernet packet to a destination GPU (101-108).

## Description

### TECHNICAL FIELD

The present disclosure relates to network communication, and particularly to a server, a GPU interconnection method, device, and a storage medium.

### BACKGROUND

Compared to traditional Central Processing Units (CPUs), Graphics Processing Units (GPUs) possess stronger computing capabilities, and their advantages are becoming increasingly apparent. Currently, a commonly used method involves interconnecting multiple GPUs via Peripheral Component interconnect Express (PCIe) buses or directly through a baseboard, in order to enhance computing power and data transmission capabilities through the cooperation of multiple GPUs.

However, due to the relatively low bandwidth of the PCIe buses between the GPUs, and the relatively low bandwidth of direct interconnections through the baseboard, this limits the bandwidth available for data transmission between the GPUs. The relatively low bandwidth can impact the efficiency of data transmission and may even lead to congestion.

### SUMMARY

To overcome the problems existing in related technologies, the present disclosure provides a server, a GPU interconnection method, a device, and a storage medium.

An embodiment of the present disclosure provides a server, including two or more graphics processing units (GPUs) arranged on a baseboard of the server, where the server is further deployed with N Ethernet switching chips, with N being greater than or equal to 1; the N Ethernet switching chips are integrated on a mezzanine board, the mezzanine board is fastened to the baseboard of the server through a designated connector; the designated connector supports a standard Ethernet protocol and is arranged between the mezzanine board and the baseboard; and each of the GPUs in the server establishes an Ethernet connection through the designated connector and each of the N Ethernet switching chips.

Any one of the GPUs in the server, serving as a source GPU, determines that data needs to be transmitted to at least one other GPU serving as a target GPU, encapsulates the data to be transmitted based on the standard Ethernet protocol, and obtains N Ethernet packets to be transmitted to the N Ethernet switching chips.

The source GPU sends the N Ethernet packets to the N Ethernet switching chips through an Ethernet connection between the source GPU and the designated connector and Ethernet connections between the designated connector and the N Ethernet switching chips, respectively, so that each of the N Ethernet switching chips sends a received Ethernet packet to the target GPU through an Ethernet connection between the Ethernet switching chip and the designated connector and an Ethernet connection between the designated connector and the target GPU.

An embodiment of the present disclosure provides a graphics processing unit (GPU) interconnection method, where the method is applied to any GPU serving as a source GPU in a server, the server includes two or more GPUs arranged on a baseboard of the server deployed with N Ethernet switching chips, with N being greater than or equal to 1; the N Ethernet switching chips are integrated on a mezzanine board, the mezzanine board is fastened to the baseboard of the server through a designated connector; the designated connector supports a standard Ethernet protocol, and is arranged between the mezzanine board and the baseboard; and each of the GPUs in the server establishes an Ethernet connection through the designated connector and each of the N Ethernet switching chips.

The method includes: determining that data needs to be transmitted to at least one other GPU serving as a target GPU; encapsulating the data to be transmitted based on the standard Ethernet protocol to obtain N Ethernet packets to be transmitted; and sending the N Ethernet packets to the N Ethernet switching chips through an Ethernet connection between the source GPU and the designated connector and Ethernet connections between the designated connector and the N Ethernet switching chips, respectively, so that: for each of the Ethernet switching chips, the Ethernet switching chip sends a received Ethernet packet to the target GPU through an Ethernet connection between the Ethernet switching chip and the designated connector and an Ethernet connection between the designated connector and the target GPU.

An embodiment of the present disclosure provides a graphics processing unit (GPU) interconnection device, where the device is applied to a server, where the server includes two or more GPUs arranged on a baseboard of the server deployed with N Ethernet switching chips, with N being greater than or equal to 1; the N Ethernet switching chips are integrated onto a mezzanine board, the mezzanine board is fastened to the baseboard of the server through a designated connector; the designated connector supports a standard Ethernet protocol, and is arranged between the mezzanine board and the baseboard; and each of the GPUs in the server establishes Ethernet connections through the designated connector and each of the N Ethernet switching chips.

The device includes: a data packet determination module and a data packet transmission module. The device includes: a data packet determination module, is to determine that data needs to be transmitted to at least one other GPU serving as a target GPU, encapsulate the data to be transmitted based on the standard Ethernet protocol, and obtain N Ethernet packets for transmission. The data packet transmission module, is to send the N Ethernet packets to the N Ethernet switching chips through an Ethernet connection between the source GPU and the designated connector and Ethernet connections between the designated connector and the N Ethernet switching chips, respectively, so that: for each of the N Ethernet switching chips, the Ethernet switching chip sends a received Ethernet packet to the target GPU through an Ethernet connection between the Ethernet switching chip and the designated connector and an Ethernet connection between the designated connector and the target GPU.

An embodiment of the present disclosure provides a method for interconnecting graphics processing units ( GPUs), where the method is applied to any Ethernet switching chip in a server including two or more GPUs arranged on a baseboard of the server, and the server is further equipped with N Ethernet switching chips, where N is greater than or equal to 1, the N Ethernet switching chips are integrated onto a mezzanine board, the mezzanine board is connected to the baseboard of the server via a designated connector, the designated connector supports a standard Ethernet protocol and is positioned between the mezzanine board and the baseboard; and each of the GPUs in the server establishes Ethernet connections through the designated connector and the N Ethernet switching chips.

The method includes: receiving, via an Ethernet connection between each of the N Ethernet switching chips and the designated connector, an Ethernet packet sent by the designated connector; where any GPU in the server, serving as a source GPU, determines that data needs to be transmitted to at least one other GPU serving as a target GPU, encapsulates the data to be transmitted based on a standard Ethernet protocol, obtains the Ethernet packet, and sends the Ethernet packet to the designated connector via the Ethernet connection between the source GPU and the designated connector; and sending a received Ethernet packet, via the Ethernet connection between the Ethernet switching chip and the designated connector, to the designated connector, so that the designated connector sends the received Ethernet packet to the target GPU via the Ethernet connection between the designated connector and the target GPU.

An embodiment of the present disclosure provides a graphics processing unit (GPU) interconnecting device for a server, where the server includes two or more GPUs arranged on a baseboard of the server and is further equipped with N Ethernet switching chips, where N is greater than or equal to 1; these N Ethernet switching chips are integrated onto a mezzanine board, the mezzanine board is connected to the baseboard of the server via a designated connector, the designated connector supports a standard Ethernet protocol and is positioned between the mezzanine board and the baseboard; and each of the GPUs in the server establishes an Ethernet connection through the designated connector and the N Ethernet switching chips.

The device includes: a data packet receiving module and a data packet sending module. The data packet receiving module is to receive, via an Ethernet connection between each of the N Ethernet switching chip and the designated connector, Ethernet packets sent by the designated connector; the Ethernet packets are generated when any GPU in the server, serving as a source GPU, determines that the source GPU needs to transmit data to at least one other GPU in the server, serving as a target GPU; the source GPU encapsulates the data to be transmitted based on a standard Ethernet protocol and sends the Ethernet packets to the designated connector via an Ethernet connection between the source GPU and the designated connector. The data packet sending module is to send the received Ethernet packets, via an Ethernet connection between each of the N Ethernet switching chip and the designated connector, to the designated connector, so that the designated connector sends the Ethernet packets to the target GPU via an Ethernet connection between the designated connector and the target GPU.

An embodiment of the present disclosure provides a non-transitory storage medium, storing computer program instructions, where the computer program instructions, when executed by a processor, cause the processor to perform the method in any one of the embodiments.

The beneficial effects of the present disclosure lie in providing a server, a GPU interconnection method, a device, and a storage medium. The server includes at least two GPUs, and each GPU is connected through Ethernet switch chips deployed in the server, enabling the GPUs to establish Ethernet connections. When a source GPU needs to send data to be transmitted to a target GPU, the source GPU encapsulates the data to be transmitted in accordance with standard Ethernet protocols to obtain an Ethernet data packet and sends it to the designated connector and then to the Ethernet switch chip through the Ethernet in sequence. The Ethernet switch chip sends it to the designated connector first through the Ethernet, and the designated connector sends it to the target GPU through the Ethernet. High-bandwidth data communication between each GPU and the designated connector and the Ethernet switch chip is achieved through the Ethernet, improving the efficiency of data transmission between GPUs. The Ethernet switch chips are integrated on the mezzanine board, which is fastened to the baseboard through the designated connector, facilitating the server to switch between different Ethernet switch chips, enhancing topological flexibility, and reducing the area of the baseboard.

### BRIEF DESCRIPTION OF THE DRAWINGS

Fig. 1 is a first schematic structural diagram of a server provided in an example of the present disclosure;
Fig. 2 is a second schematic structural diagram of the server provided in an example of the present disclosure;
Fig. 3 is a third schematic structural diagram of the server provided in an example of the present disclosure;
Fig. 4 is a fourth schematic structural diagram of the server provided in an example of the present disclosure;
Fig. 5 is a first flowchart of a GPU interconnection method provided in an example of the present disclosure;
Fig. 6 is a first schematic structural diagram of a GPU interconnection device applied to a server provided in an example of the present disclosure;
Fig. 7 is a second flowchart of the GPU interconnection method provided in an example of the present disclosure;
Fig. 8 is a second schematic structural diagram of a GPU interconnection device applied to a server provided in an example of the present disclosure.

### DETAILED DESCRIPTION

To better understand the technical solutions provided in the examples of the present disclosure and make the objectives, features, and advantages of the examples more apparent and comprehensible, detailed explanations of the technical solutions in the examples of the present disclosure are provided below in conjunction with the accompanying drawings.

The present disclosure breaks the limitation of conventional methods that use internal buses of servers to connect multiple GPUs, and creatively applies Ethernet technology, which is used for communication between servers and other external devices, among the GPUs within the server, achieving GPU interconnection through Ethernet technology. Since the bandwidth for data transmission via Ethernet is much higher than that via internal server buses, the bandwidth for data transmission among the GPUs in the present disclosure is significantly increased, thereby improving the efficiency of data transmission among the GPUs and reducing the probability of congestion during data transmission.

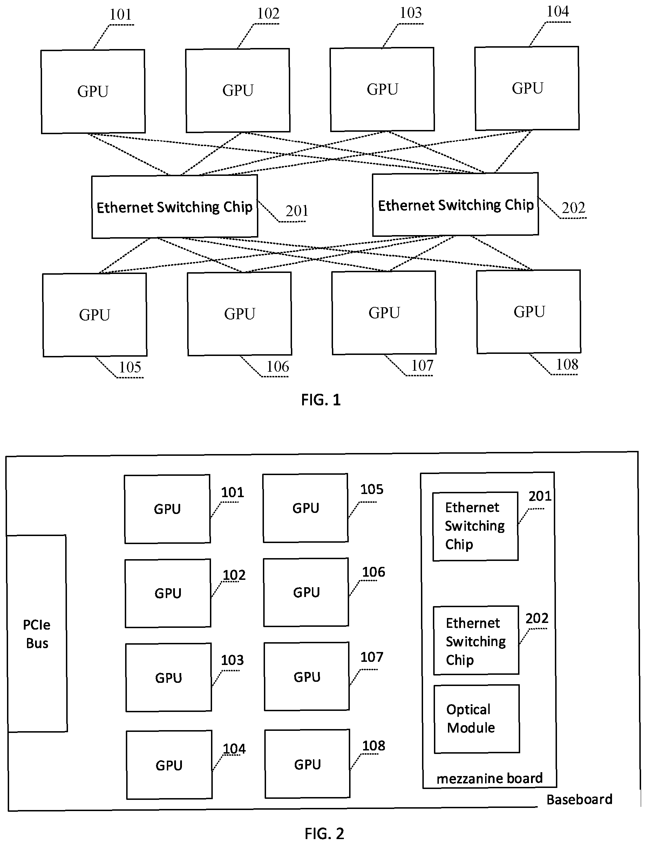

Please refer to Fig. 1, which is a first schematic structural diagram of a server provided in an example of the present disclosure. The server includes at least two GPUs arranged on the server's baseboard, and the server further deploys N Ethernet switch chips, where N is greater than or equal to 1. The N Ethernet switch chips are integrated on a mezzanine board, which is fastened to the server's baseboard through a designated connector 3. The designated connector 3 supports a standard Ethernet protocol and is laid out between the mezzanine board and the baseboard. The GPUs in the server establish Ethernet connections through the designated connector and the N Ethernet switch chips. As an optional example, the designated connector 3 provides reliable high speed data transfer rates.

Any GPU in the server, serving as a source GPU determines data needs to be transmitted to at least one other GPU serving as a target GPU, encapsulates the data to be transmitted based on the standard Ethernet protocol, and obtains N Ethernet packets for transmission.

The source GPU sends the N Ethernet packets to the N Ethernet switch chips separately through the Ethernet connection between the source GPU and the designated connector and the Ethernet connection between the designated connector and the N Ethernet switch chips, so that each of the N Ethernet switch chips sends the received Ethernet packet to the target GPU through the Ethernet connection between the Ethernet switch chip and the designated connector and the Ethernet connection between the designated connector and the target GPU.

The present disclosure creatively applies Ethernet technology, which is used for communication between servers and other external devices, among the GPUs within the server, achieving GPU interconnection through Ethernet technology. Therefore, all the GPUs, designated connectors, and Ethernet switch chips deployed in the server support a standard Ethernet protocol, thereby enabling data transmission among the GPUs, designated connectors, and Ethernet switch chips using Ethernet, and ultimately achieving data transmission among the GPUs, i.e., GPU interconnection. Since the bandwidth for data transmission via Ethernet is much higher than that via internal server buses, the bandwidth for data transmission among the GPUs in the present disclosure is significantly increased, thereby improving the efficiency of data transmission among the GPUs and reducing the probability of congestion during data transmission.

To achieve the purpose of GPU interconnection through Ethernet technology as described earlier, the present disclosure further improves the structure of the server. The server provided by the present disclosure is equipped with at least two GPUs and N Ethernet switch chips, both of which support a standard Ethernet protocol. Each GPU in the server is connected to the Ethernet switch chips through the designated connector, enabling data transmission between any two GPUs through the Ethernet switch chips. Please refer to Fig. 1 (the designated connector is not shown in Fig. 1), which illustrates an example of a server including eight GPUs (including GPU 101, GPU 102, GPU 103, GPU 104, GPU 105, GPU 106, GPU 107, and GPU 108) and two Ethernet switch chips (including Ethernet switch chip 201 and Ethernet switch chip 202). Each GPU is connected to both Ethernet switch chips, enabling data transmission between any two GPUs through the Ethernet switch chips.

The following provides a detailed description of the process of implementing GPU interconnection in a server provided by the present disclosure, in combination with the structure of the server.

When a server uses GPUs for model training, due to the large amount of data that needs to be processed, multiple GPUs are required to jointly complete the model training. During this process, the GPUs need to synchronize training results, which necessitates the use of Ethernet switching chips to facilitate data transmission between the GPUs. Any GPU in the server that needs to send data to be transmitted to other GPUs can serve as a source GPU; the data to be transmitted refers to the data that the source GPU intends to synchronize with the target GPU (including but not limited to the data that needs to be synchronized between GPUs during model training using multiple GPUs in the server); the number of target GPUs can be one or multiple, and for each target GPU, it receives the data to be transmitted from the source GPU through an Ethernet switching chip and a designated connector. For example, GPU 101 in Fig. 1 can serve as the source GPU, and GPU 102 and GPU 103 in Fig. 1 can serve as the target GPUs.

When the source GPU determines that it needs to transmit the data to the target GPU, the source GPU first encapsulates the data to be transmitted based on the standard Ethernet protocol and obtains N Ethernet packets to be transmitted. An Ethernet connection is established between the source GPU and the Ethernet switching chip, so after obtaining the N Ethernet packets, the source GPU sends the N Ethernet packets to N Ethernet switching chips through the Ethernet connection between the source GPU and the designated connector, as well as the Ethernet connection between the designated connector and each of the N Ethernet switching chips. In cases where the amount of data to be transmitted is large, encapsulating the data to be transmitted and obtaining N Ethernet packets, and using N Ethernet switching chips for data transmission respectively, can further enhance the efficiency of data transmission. An Ethernet connection is established between the Ethernet switching chips and the target GPUs, so each of the N Ethernet switching chips sends the received Ethernet packets to the target GPUs using the Ethernet connection between the Ethernet switching chip and the target GPUs.

For example, when GPU 101 in Fig. 1 serves as the source GPU, and GPU 102 and GPU 103 in Fig. 1 serve as the target GPUs, GPU 101 first encapsulates the data to be transmitted based on the standard Ethernet protocol to obtain a first Ethernet packet and a second Ethernet packet; GPU 101 then sends the first Ethernet packet to Ethernet switching chip 201 and the second Ethernet packet to Ethernet switching chip 202; Ethernet switching chip 201 sends the first Ethernet packet to GPU 102 and GPU 103, and Ethernet switching chip 202 sends the second Ethernet packet to GPU 102 and GPU 103.

In general, since Ethernet connections are established between the source GPU and the Ethernet switching chips, as well as between the target GPUs and the Ethernet switching chips, the data transmission between the source GPU and the Ethernet switching chips, and between the Ethernet switching chips and the target GPUs, is done through Ethernet packets. The data transmission bandwidth of Ethernet is relatively large, thus enhancing the data transmission bandwidth for interconnection between the source GPU and the target GPUs.

The present disclosure does not place special restrictions on how the source GPU specifies the target GPU. For example, when data transmission is performed in a point-to-point manner, after the topology of the server is determined, the target GPU corresponding to the source GPU is further determined; alternatively, when the source GPU sends an Ethernet packet to the Ethernet switching chip, it further sends the address of the target GPU to the Ethernet switching chip, and the Ethernet switching chip determines the target GPU based on this address.

The present disclosure further considers the possibility that the server may switch to using Ethernet switching chips from different manufacturers or models. If all Ethernet switching chips are directly arranged on the server's baseboard, it would make it difficult for the server to switch to using Ethernet switching chips from different manufacturers or models.

Therefore, the present disclosure integrates all Ethernet switching chips in the server onto a mezzanine board, and then fastens the mezzanine board to the baseboard (including but not limited to a Universal Baseboard (UBB)) through a designated connector 3, which means that the Ethernet switching chips adopt a modular design. On the one hand, since the mezzanine board is fastened to the baseboard through the designated connector 3, when the server needs to switch to using other Ethernet switching chips, it can simply remove the mezzanine board and replace it with another mezzanine board equipped with different Ethernet switching chips, providing high topological flexibility for the server. In addition, the present disclosure does not place special restrictions on the number of mezzanine boards, allowing all Ethernet switching chips to be integrated onto the same mezzanine board or deploying each Ethernet switching chip on different mezzanine boards. On the other hand, since the designated connector 3 itself has a certain physical height, a certain space is formed between the baseboard and the mezzanine board of the server, allowing some components of the server to be laid out below the mezzanine board, thereby reducing the area of the baseboard.

For example, the designated connector 3 supports the Ethernet protocol of 112G 4-level Pulse Amplitude Modulation (PAM4) and has a maximum height support of 11mm. Therefore, components on the server's baseboard with a height less than 11mm can be laid out below the mezzanine board, thereby reducing the area of the baseboard.

It should further be noted that all Ethernet switching chips in the present disclosure are integrated within the server. Compared to the architecture of placing Ethernet switching chips externally to the server, the server in the present disclosure has higher integration, lower costs, and reduced data latency for data transmission between GPUs.

Furthermore, it should further be noted that the focus of the server architecture provided by the present disclosure for achieving GPU interconnection lies in connecting each GPU to a network switching module, thereby utilizing the network switching module to facilitate data transmission between the GPUs. Considering the currently high data transmission rates based on Ethernet connections, Ethernet switching chips are used as the network switching module to enhance the performance of the server when utilizing GPUs to achieve target functionalities. In fact, based on the aforementioned GPU architecture, data transmission between each GPU and the network switching module can further be achieved using network transmission protocols such as PCle; when a transmission protocol with better transmission performance emerges, GPU interconnection can further be achieved by replacing the aforementioned Ethernet switching module with a network switching module that supports this transmission protocol.

In summary, the present disclosure provides a server including at least two GPUs. Each GPU is connected through an Ethernet switching chip deployed in the server, enabling the establishment of Ethernet connections among the GPUs. When a source GPU needs to send data to be transmitted to a target GPU, the source GPU encapsulates the data to be transmitted based on the standard Ethernet protocol to obtain an Ethernet data packet and sends it to a specified connector and the Ethernet switching chip sequentially through the Ethernet. The Ethernet switching chip then sends it to the specified connector first, and the specified connector sends it to the target GPU through the Ethernet. High-bandwidth data communication is achieved among each GPU, the specified connector, and the Ethernet switching chip, improving the efficiency of data transmission between the GPUs. The Ethernet switching chips are integrated on a mezzanine board, which is fastened to a baseboard through the specified connectors, facilitating the server to switch between different Ethernet switching chips, enhancing topological flexibility, and reducing the area of the baseboard.

### Based on the example above:

As an optional example, the number N of Ethernet switching chips is determined based on the number of all GPUs in the server, the bandwidth supported by the GPUs, and the bandwidth supported by the Ethernet switching chips.

In this example, the number of Ethernet switching chips in the server is N, and N is determined based on the number of all GPUs in the server, the bandwidth supported by the GPUs, and the bandwidth supported by the Ethernet switching chips. N can be the quotient obtained by dividing the sum of the bandwidth supported by all GPUs by the bandwidth supported by the Ethernet switching chips. In cases where N is not an integer, N can be rounded up to ensure that the Ethernet switching chips can support the sum of the bandwidth supported by all GPUs.

For example, if there are 8 GPUs in the server, each GPU routes 8 lanes, and a maximum transmission rate of 4 wires included in one lanes is 112G; then the 8 GPUs in the server routes a total of 8**8 lanes, and the maximum total transmission rate for the 8 GPUs to operate is 8**8**4**112G=25.6T; if the bandwidth supported by one Ethernet switching chip is 25.6T, then one Ethernet switching chip is sufficient to support the bandwidth of the 8 GPUs. As shown in Fig. 1, in cases where redundant Ethernet switching chips are provided, some lanes of each GPU are connected to the first Ethernet switching chip, and the other lanes are connected to the second Ethernet switching chip. For instance, 4 lanes connecting one GPU are connected to the first Ethernet switching chip, and the other 4 lanes are connected to the second Ethernet switching chip. It is easy to understand that when all lanes connecting the GPU and the Ethernet switching chip are used for transmitting Ethernet data packets, both achieve the maximum transmission rate and maximum transmission bandwidth.

Additionally, redundant Ethernet switching chips can be provided in the server, so that when a certain Ethernet switching chip in the server fails, the transmission of data to be transmitted can be achieved through other normal Ethernet switching chips in the server. For example, in cases where N is the quotient obtained by dividing the sum of the bandwidth supported by all GPUs by the bandwidth supported by the Ethernet switching chips, the number of Ethernet chips set in the server is greater than N.

Furthermore, the present disclosure does not particularly limit the specific number of GPUs set in the server, as long as the number of GPUs is greater than or equal to 2. However, considering that the volume of GPUs supporting the Ethernet protocol is relatively large, it is difficult to deploy too many GPUs in the server. Therefore, eight GPUs or a multiple of eight GPUs can be deployed in the server, with a topological structure that can refer to Fig. 2. Every group of eight GPUs is arranged on one baseboard, which can be the same or a different baseboard.

As an optional example, the server further includes a CPU, which is connected to the GPUs in the server through a PCle bus. The CPU is used to manage the GPUs and send training data to the GPUs to execute model training. The data to be transmitted is generated during the process of training a model by the source GPU based on the training data.

In application scenarios requiring a large amount of data transmission and sharing, such as deep learning and high-performance computing, servers need to utilize GPUs to perform tasks such as model training. When GPUs are mounted on the server, the server can identify these GPUs and needs to manage and coordinate these GPUs through the CPU, for example, by specifying which GPUs to use for model training through the CPU. When using GPUs for model training, the CPU further needs to send training data used during training to each GPU.

Based on the above considerations, in this example, a CPU is provided in the server, and all GPUs in the server are connected to the CPU through the PCIe bus, so that the CPU can manage the GPUs (including but not limited to the CPU sending management commands to the GPUs through the PCIe bus) and send training data to the GPUs to execute model training, allowing the GPUs to use the training data for model training, meeting the needs of large-scale training scenarios in the server and improving server performance.

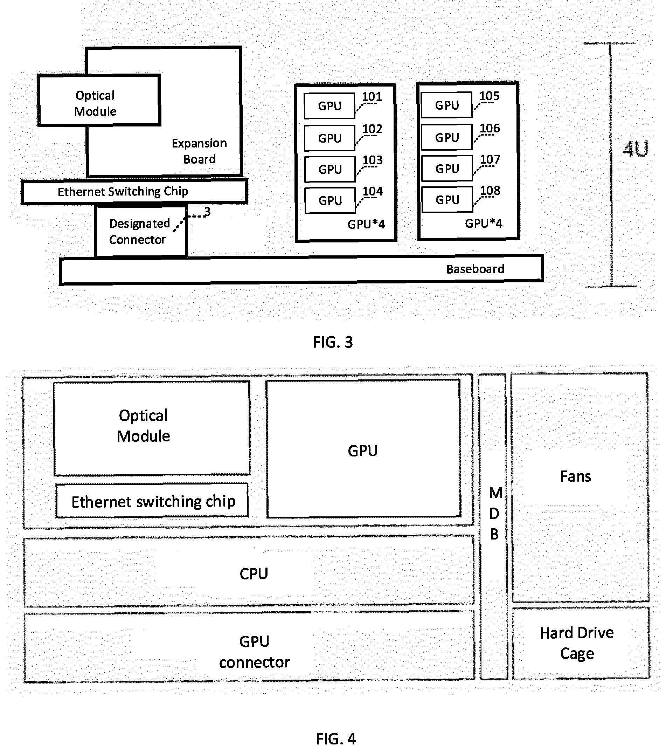

Additionally, please refer to Fig. 4, which is a fourth structural schematic diagram of a server provided in an example of the present disclosure. The entire module shown in Fig. 4 has a height of 4U. U stands for a Unit, which is a custom measurement where each unit is specifically defined to be equivalent to 44.45 millimeters. A unit custom measurement where each unit is specifically defined to be equivalent to 44.45 millimeters. In Fig. 4, the GPU is connected to the PCIe connector corresponding to the CPU through a PCIe bus passing through a Middle Board Disk Management Board (MDB), enabling data transmission between the GPU and the CPU. Components such as fans and hard drive cages may further be deployed in the server, and the present disclosure does not particularly limit this.

As an optional example, the server further includes an optical module that is arranged on an expansion board of the server; the expansion board is fastened to a mezzanine board of the server; the optical module establishes an Ethernet connection with each of the N Ethernet switching chips; the optical module receives Ethernet packets through each Ethernet connection established with each of the Ethernet switching chips and transmits the Ethernet packets to other servers.

To meet the requirements of large-scale model training, multiple servers may sometimes be used to jointly implement model training, which necessitates data transmission between the servers. To this end, in this example, an optical module is specially provided in the server, and the optical module establishes an Ethernet connection with each of N Ethernet switching chips, so that the optical module can receive Ethernet packets sent by the GPU through the Ethernet switching chips via Ethernet, and then transmit the Ethernet packets to other servers.

Since data transmission between different servers is further implemented using a standard Ethernet protocol, the GPU of this server can encapsulate data to be transmitted based on the standard Ethernet protocol to obtain the aforementioned Ethernet packets. The Ethernet packets sent by the GPU are transmitted to the Ethernet switching chips via Ethernet, then to the optical module via Ethernet, and finally transmitted by the optical module of this server to the optical module of other servers via Ethernet. The entire transmission process does not involve protocol conversion, facilitating data transmission.

This example does not particularly limit the specific model of the optical module. For example, the optical module can be a QSFP-DD (Quad Small Form Factor Pluggable-Double Density), where DD indicates double density. In the case of a QSFP-DD optical module, its electrical interface uses 8 channels, each adopting PAM4 modulation with a speed of up to 112Gbit/s, further enhancing data transmission performance between servers.

Please refer to Fig. 3, which is a third structural schematic diagram of a server provided in an example of the present disclosure. The optical module in this example further adopts a modular design. Specifically, the optical module is arranged on an expansion board of the server, and the expansion board is fastened to a mezzanine board of the server. Therefore, when the server needs to replace the optical module with one from a different manufacturer or of a different model, the optical module can be removed from the mezzanine board without replacing the entire baseboard, enhancing the topological flexibility of the server.

Fig. 3 takes an example where there is one optical module in the server. In practical applications, the number of optical modules can be expanded. When there are multiple optical modules, at least one optical module is arranged on both the front and back side of any expansion board; and/or, when more than two optical modules are arranged on both the front and back side of any expansion board, the more than two optical modules arranged on both the front and back side of the expansion board are placed vertically.

In this example, arranging at least one optical module on both the front and back side of any expansion board increases the number of optical modules that can be deployed in the server, thereby enhancing the data transmission capability between different servers. On the other hand, the optical modules on the expansion board are dispersed on both the front and back side, which facilitates heat dissipation of the optical modules. On this basis, when more than two optical modules are arranged on both the front and back side of any expansion board, and the more than two optical modules are placed vertically, on the one hand, more optical modules can be deployed on the expansion board, thereby enhancing the data transmission capability between different servers. On the other hand, when the number of optical modules increases, since each optical module is placed vertically, they can all dissipate heat adequately.

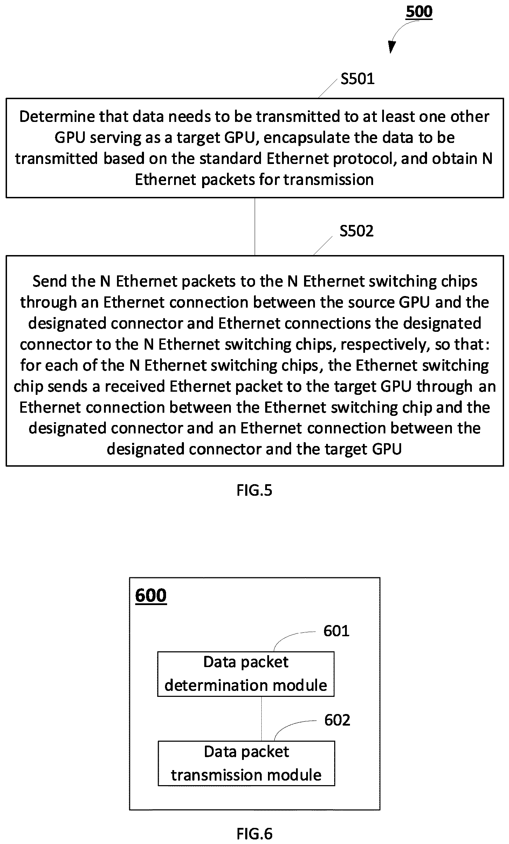

Please refer to Fig. 5, which is a first flowchart illustrating a GPU interconnection method provided in an example of the present disclosure. This method 500 is applied to any GPU serving as a source GPU in a server, which includes at least two GPUs arranged on a baseboard of the server. The server is further equipped with N Ethernet switching chips, where N is greater than or equal to 1. The N Ethernet switching chips are integrated on a mezzanine board, which is fastened to the baseboard of the server through a designated connector 3. The designated connector 3 supports a standard Ethernet protocol and is laid out between the mezzanine board and the baseboard. Each GPU in the server establishes an Ethernet connection through the designated connector 3 and the N Ethernet switching chips.

The method 500 includes following processes:
Process S501: Upon determining that data to be transmitted needs to be sent to at least one other GPU serving as a target GPU, the data to be transmitted is encapsulated based on the standard Ethernet protocol to obtain N Ethernet packets to be transmitted.

Process S502: The N Ethernet packets are sent to the N Ethernet switching chips through the Ethernet connection between the source GPU and the designated connector and the Ethernet connection between the designated connector and each of the N Ethernet switching chips, respectively, so that each of the N Ethernet switching chips sends the received Ethernet packet to the target GPU through the Ethernet connection between the Ethernet switching chip and the designated connector and the Ethernet connection between the designated connector and the target GPU.

### Based on the above example:

In an example, a number N of Ethernet switching chips is determined based on the number of all GPUs in the server, bandwidth supported by the GPUs, and bandwidth supported by the Ethernet switching chips;

In an example,, the server further includes a CPU; the CPU connects to the GPUs in the server through a PCIe bus, and the CPU is used to manage the GPUs and send training data to the GPUs to execute model training; the data to be transmitted is generated during the process of training a model by the source GPU based on the training data;

In an example,, the server further includes a optical modules; the optical module is arranged on an expansion board of the server; the expansion board is fastened to the mezzanine board of the server; the optical module establishes an Ethernet connection with each of the N Ethernet switching chips, receives Ethernet packets through each Ethernet connection established with each of the N Ethernet switching chips, and transmits the Ethernet packets to other servers.

In an example, a front side and a back side of any expansion board of the server are each equipped with one optical module; or, both a front side and a back side of any expansion board of the server are equipped with two or more optical modules that are vertically arranged.

For a detailed introduction to the GPU interconnection method, please refer to the above example of the server, which will not be elaborated herein.

Please refer to Fig. 6, which is a first structural diagram of a GPU interconnection device applied to a server provided in an example of the present disclosure. The server includes at least two GPUs arranged on a baseboard of the server, and the server is further equipped with N Ethernet switching chips, where N is greater than or equal to 1. The N Ethernet switching chips are integrated on a mezzanine board, which is fastened to the baseboard of the server through a designated connector. The designated connector supports a standard Ethernet protocol and is positioned between the mezzanine board and the baseboard. Each GPU in the server establishes an Ethernet connection through the designated connector and the N Ethernet switching chips. The GPU interconnection device 600 includes:

A data packet determination module 601 is to determine that data to be transmitted needs to be sent to at least one other GPU serving as a target GPU, encapsulate the data to be transmitted based on the standard Ethernet protocol, and obtain N Ethernet packets to be transmitted.

A data packet transmission module 602 is to send the N Ethernet packets to the N Ethernet switching chips through the Ethernet connections between the source GPU and the designated connector and the Ethernet connection between the designated connector and each of the N Ethernet switching chips, respectively, so that each of the N Ethernet switching chips sends the received Ethernet packet to the target GPU through the Ethernet connection between the Ethernet switching chip and the designated connector and the Ethernet connection between the designated connector and the target GPU.

### Based on the above example:

In an example, the number N of Ethernet switching chips is determined based on the number of all GPUs in the server, the bandwidth supported by the GPUs, and the bandwidth supported by the Ethernet switching chips.

In an example, the server further includes a CPU; the CPU connects to the GPUs in the server through a PCIe bus, and the CPU is used to manage the GPUs and send training data to the GPUs to execute model training; the data to be transmitted is generated during the process of training a model by the source GPU based on the training data.

In an example, the server further includes optical modules; the optical modules are arranged on an expansion board newly expanded in the server; the expansion board is fastened to the mezzanine board of the server; the optical module establishes an Ethernet connection with each of the N Ethernet switching chips; the optical module receives Ethernet packets through each Ethernet connection established with each of the Ethernet switching chips and transmit the Ethernet packets to other servers.

In an example, at least one optical module is arranged on both the front and back side of any expansion board; or, both a front side and a back side of any expansion board of the server are equipped with two or more optical modules that are vertically arranged.

For a detailed introduction to the GPU interconnection device applied to the server, please refer to the above example of the server, and the present disclosure will not elaborate further here.

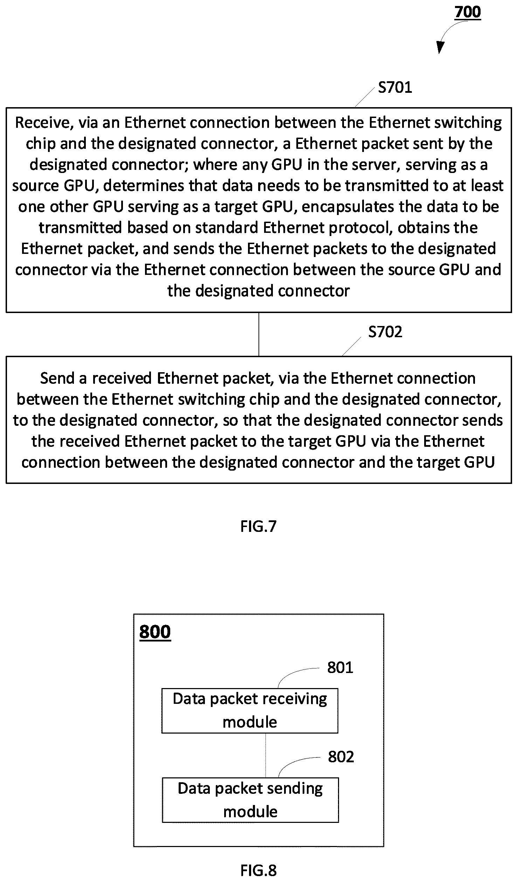

Fig. 7 illustrates a second flowchart of a GPU interconnection method provided in an example of the present disclosure. This method is applied to any one of the N Ethernet switching chips in a server. The server includes at least two GPUs arranged on a baseboard of the server and is further equipped with N Ethernet switching chips, where N is greater than or equal to 1. The N Ethernet switching chips are integrated on a mezzanine board, which is fastened to the baseboard of the server through a designated connector. The designated connector supports a standard Ethernet protocol and is laid out between the mezzanine board and the baseboard. Each GPU in the server establishes an Ethernet connection through the designated connector and the N Ethernet switching chips. The method 700 includes:

Process S701: receiving, via an Ethernet connection between the Ethernet switching chip and the designated connector, an Ethernet packet sent by the designated connector; where any GPU in the server, serving as a source GPU, determines that data needs to be transmitted to at least one other GPU serving as a target GPU, encapsulates a data to be transmitted based on a standard Ethernet protocol, obtains the Ethernet packet, and send the Ethernet packets to the designated connector via the Ethernet connection between the source GPU and the designated connector.

Process S702: sending a received Ethernet packet, via the Ethernet connection between the Ethernet switching chip and the designated connector, to the designated connector, so that the designated connector sends the received Ethernet packet to the target GPU via the Ethernet connection between the designated connector and the target GPU.

In one example, a number N of Ethernet switching chips is determined based on the number of all GPUs in the server, the bandwidth supported by the GPUs, and the bandwidth supported by the Ethernet switching chips.

In one example, the server may further include a CPU; the CPU connects to the GPUs in the server through a PCIe bus and is used to manage the GPUs and send training data to the GPUs to execute model training. The data to be transmitted is generated during the process of training a model by the source GPU based on the training data.

In one example, the server further includes optical modules; the optical modules are arranged on an expansion board newly expanded in the server; the expansion board is fastened to the mezzanine board of the server; the optical module establishes an Ethernet connection with each of the N Ethernet switching chips; the optical module receives Ethernet packets through each Ethernet connection established with each of the Ethernet switching chips and transmit the Ethernet packets to other servers.

In one example, at least one optical module is arranged on both the front and back side of any expansion board; and/or, when more than two optical modules are arranged on both the front and back side of any expansion board, the more than two optical modules arranged on both the front and back side of the expansion board are placed vertically.

For a detailed introduction to the GPU interconnection method, please refer to the above example of the server, and the present disclosure will not elaborate further here.

Fig. 8 illustrates a second structural diagram of a GPU interconnection device for a server provided in an example of the present disclosure. The server includes at least two GPUs arranged on a baseboard of the server and is further equipped with N Ethernet switching chips, where N is greater than or equal to 1. The N Ethernet switching chips are integrated on a mezzanine board, which is fastened to the baseboard of the server through a designated connector. The designated connector supports a standard Ethernet protocol and is laid out between the mezzanine board and the baseboard. Each GPU in the server establishes an Ethernet connection through the designated connector and the N Ethernet switching chips. The device 800 includes: a packet receiving module 801 and a packet sending module 802.

The packet receiving module 801 is used for receiving an Ethernet packet sent by the designated connector through the Ethernet connection between the Ethernet switching chip and the designated connector. The Ethernet packet is obtained after any one of the GPUs serving as a source GPU in the server encapsulates data to be transmitted based on the standard Ethernet protocol when determining that the data needs to be transmitted to at least one other GPU serving as a target GPU in the server. The source GPU sends the Ethernet packet to the designated connector through the Ethernet connection between the source GPU and the designated connector.

The packet sending module 802 is used for sending the received Ethernet packet to the designated connector through the Ethernet connection between the Ethernet switching chip and the designated connector, so that the designated connector sends the Ethernet packet to the target GPU through the Ethernet connection between the designated connector and the target GPU.

In an example, the number N of Ethernet switching chips is determined based on the number of all GPUs in the server, the bandwidth supported by the GPUs, and the bandwidth supported by the Ethernet switching chips.

In an example, the server further includes a CPU; the CPU connects to the GPUs in the server through a PCIe bus and is used to manage the GPUs and send training data to the GPUs to execute model training. The data to be transmitted is generated during the process of training a model by the source GPU based on the training data.

In an example, the server further includes optical modules; the optical modules are arranged on an expansion board newly expanded in the server; the expansion board is fastened to the mezzanine board of the server; the optical module establishes an Ethernet connection with each of the N Ethernet switching chips; the optical modules receive Ethernet packets through each Ethernet connection established with each of the Ethernet switching chips and transmit the Ethernet packets to other servers.

In an example, at least one optical module is arranged on both the front and back side of any expansion board; or, both a front side and a back side of any expansion board of the server are equipped with two or more optical modules that are vertically arranged.

For a detailed introduction to the GPU interconnection device for a server, please refer to the above example of the server, and the present disclosure will not elaborate further here.

An example of the present disclosure further provides a structural diagram of a storage medium, on which computer program instructions are stored. When the computer program instructions are executed by a processor, the processor performs the steps in any of the above methods.

For a detailed introduction to the storage medium, please refer to the above example of the server, and the present disclosure will not elaborate further here.

In this specification, relational terms such as first and second are used solely to distinguish one entity or operation from another entity or operation without necessarily requiring or implying any such actual relationship or order between these entities or operations. Moreover, the terms "include," "contain," or any other variations thereof are intended to cover non-exclusive inclusions, such that a process, method, article, or device that includes a series of elements not only includes those elements but may further include other elements not explicitly listed or inherent to such process, method, article, or device. In the absence of more restrictions, elements defined by the phrase "including a ..." do not exclude the presence of additional identical elements in the process, method, article, or device that includes the elements.

The above description of the disclosed examples enables those skilled in the art to implement or use the invention. Various modifications to these examples will be apparent to those skilled in the art, and the general principles defined herein can be implemented in other examples without departing from the spirit or scope of the invention. Therefore, the invention is not limited to the examples shown herein but is to be accorded the widest scope consistent with the principles and novel features disclosed herein.

## Claims

1. A server, comprising two or more graphics processing units (GPUs) arranged on a baseboard of the server, wherein the server is further deployed with N Ethernet switching chips, with N being greater than or equal to 1; the N Ethernet switching chips are integrated on a mezzanine board, the mezzanine board is fastened to the baseboard of the server through a designated connector; the designated connector supports a standard Ethernet protocol and is arranged between the mezzanine board and the baseboard; and each of the GPUs in the server establishes an Ethernet connection through the designated connector and each of the N Ethernet switching chips;
wherein any one of the GPUs in the server, serving as a source GPU, determines that data needs to be transmitted to at least one other GPU serving as a target GPU, encapsulates the data to be transmitted based on the standard Ethernet protocol, and obtains N Ethernet packets to be transmitted to the N Ethernet switching chips;
wherein the source GPU sends the N Ethernet packets to the N Ethernet switching chips through an Ethernet connection between the source GPU and the designated connector and Ethernet connections between the designated connector and the N Ethernet switching chips, respectively, so that each of the N Ethernet switching chips sends a received Ethernet packet to the target GPU through an Ethernet connection between the Ethernet switching chip and the designated connector and an Ethernet connection between the designated connector and the target GPU.

2. The server of claim 1, wherein the number N of Ethernet switching chips is determined based on a number of the GPUs in the server, bandwidth supported by the GPUs, and bandwidth supported by the N Ethernet switching chips.

3. The server of claim 1, wherein the server further comprises a CPU;
wherein the CPU connects to the GPUs in the server through a peripheral component interconnect express (PCIe) bus, manages the GPUs and sends training data to the GPUs to execute model training;
wherein the data to be transmitted is generated during a process of the source GPU training a model based on the training data.

4. The server of claim 1, wherein
the server further comprises an optical module arranged on an expansion board of the server; the expansion board is fastened to the mezzanine board of the server; the optical module is to establish an Ethernet connection with each of the N Ethernet switching chips, receive Ethernet packets through each Ethernet connection that is established with each of the Ethernet switching chips, and transmits the Ethernet packets to other servers.

5. The server of claim 1, wherein
a front side and a back side of any expansion board of the server are each equipped with at least one optical module;
or, both a front side and a back side of any expansion board of the server are equipped with two or more optical modules that are vertically arranged.

6. A graphics processing unit (GPU) interconnection method, wherein the method is applied to any GPU serving as a source GPU in a server, the server comprises two or more GPUs arranged on a baseboard of the server deployed with N Ethernet switching chips, with N being greater than or equal to 1; the N Ethernet switching chips are integrated on a mezzanine board, the mezzanine board is fastened to the baseboard of the server through a designated connector; the designated connector supports a standard Ethernet protocol, and is arranged between the mezzanine board and the baseboard; and each of the GPUs in the server establishes an Ethernet connection through the designated connector and each of the N Ethernet switching chips;
wherein the method comprises:
determining (S501) that data needs to be transmitted to at least one other GPU serving as a target GPU;
encapsulating (S501) the data to be transmitted based on the standard Ethernet protocol to obtain N Ethernet packets to be transmitted; and
sending (S502) the N Ethernet packets to the N Ethernet switching chips through an Ethernet connection between the source GPU and the designated connector and Ethernet connections between the designated connector and the N Ethernet switching chips, respectively, so that: for each of the Ethernet switching chips, the Ethernet switching chip sends a received Ethernet packet to the target GPU through an Ethernet connection between the Ethernet switching chip and the designated connector and an Ethernet connection between the designated connector and the target GPU.

7. The method of claim 6, wherein
the number N of Ethernet switching chips is determined based on a number of the GPUs in the server, bandwidth supported by the GPUs, and bandwidth supported by the N Ethernet switching chips;
the server further comprises a CPU connecting to the GPUs in the server through a peripheral component interconnect express (PCIe) bus; wherein the CPU is to manage the GPUs and send training data to the GPUs to execute model training; the data to be transmitted is generated during a process of the source GPU training a model based on the training data;
the server further comprises an optical module that is arranged on an expansion board of the server; wherein, the expansion board is fastened to the mezzanine board of the server; the optical module establishes an Ethernet connection with each of the N Ethernet switching chips, receives Ethernet packets through each Ethernet connection established with each of the Ethernet switching chips, and transmits the Ethernet packets to other servers; or
a front side and a back side of any expansion board are each equipped with at least one optical module, or both a front side and a back side of any expansion board of the server are equipped with two or more optical modules that are vertically arranged.

8. A graphics processing unit (GPU) interconnection device, wherein the device is applied to a server, wherein the server comprises two or more GPUs arranged on a baseboard of the server deployed with N Ethernet switching chips, with N being greater than or equal to 1; the N Ethernet switching chips are integrated onto a mezzanine board, the mezzanine board is fastened to the baseboard of the server through a designated connector; the designated connector supports a standard Ethernet protocol, and is arranged between the mezzanine board and the baseboard; and each of the GPUs in the server establishes Ethernet connections through the designated connector and each of the N Ethernet switching chips;
wherein the device (600) comprises: a data packet determination module (601) and a data packet transmission module (602);
the data packet determination module (601) is to determine that data needs to be transmitted to at least one other GPU serving as a target GPU, encapsulate the data to be transmitted based on the standard Ethernet protocol, and obtain N Ethernet packets for transmission;
the data packet transmission module (602) is to send the N Ethernet packets to the N Ethernet switching chips through an Ethernet connection between the source GPU and the designated connector and Ethernet connections between the designated connector and the N Ethernet switching chips, respectively, so that: for each of the N Ethernet switching chips, the Ethernet switching chip sends a received Ethernet packet to the target GPU through an Ethernet connection between the Ethernet switching chip and the designated connector and an Ethernet connection between the designated connector and the target GPU.

9. The device of claim 8, wherein
the number N of the Ethernet switching chips is determined based on a number of the GPUs in the server, bandwidth supported by the GPUs, and bandwidth supported by the Ethernet switching chips;
the server further comprises a CPU connecting to the GPUs in the server through a peripheral component interconnect express (PCle) bus, wherein the CPU is to manage the GPUs and send training data to the GPUs to perform model training; the data to be transmitted is generated during a process of the source GPU training a model based on the training data;
the server further comprises an optical module arranged on an expansion board which is fastened to the mezzanine board of the server; the optical module establishes an Ethernet connection with each of the N Ethernet switching chips; the optical module receives Ethernet data packets through each Ethernet connection established with each of the Ethernet switching chips and transmits the Ethernet data packets to other servers; or
a front side and a back side of any expansion board of the server are each equipped with at least one optical module, or both a front side and a back side of any expansion board of the server are equipped with two or more optical modules that are vertically arranged.

10. A method for interconnecting graphics processing units ( GPUs), wherein the method is applied to any Ethernet switching chip in a server comprising two or more GPUs arranged on a baseboard of the server, and the server is further equipped with N Ethernet switching chips, wherein N is greater than or equal to 1, the N Ethernet switching chips are integrated onto a mezzanine board, the mezzanine board is connected to the baseboard of the server via a designated connector, the designated connector supports a standard Ethernet protocol and is positioned between the mezzanine board and the baseboard; and each of the GPUs in the server establishes Ethernet connections through the designated connector and the N Ethernet switching chips;
wherein the method comprises:
receiving (S701), via an Ethernet connection between each of the N Ethernet switching chips and the designated connector, an Ethernet packet sent by the designated connector; wherein any GPU in the server, serving as a source GPU, determines that data needs to be transmitted to at least one other GPU serving as a target GPU, encapsulates the data to be transmitted based on a standard Ethernet protocol, obtains the Ethernet packet, and sends the Ethernet packet to the designated connector via the Ethernet connection between the source GPU and the designated connector; and
sending (S702) a received Ethernet packet, via the Ethernet connection between the Ethernet switching chip and the designated connector, to the designated connector, so that the designated connector sends the received Ethernet packet to the target GPU via the Ethernet connection between the designated connector and the target GPU.

11. The method of claim 10, wherein
the number N of Ethernet switching chips is determined based on a number of the GPUs in the server, bandwidth supported by the GPUs, and bandwidth supported by the Ethernet switching chips;
the server further comprises a CPU connecting to the GPUs in the server via the PCIe bus and is used to manage the GPUs and send training data to the GPUs for model training; the data to be transmitted is generated during a process of the source GPU training a model based on the training data;
the server further comprises an optical module arranged on an expansion board of the server; the expansion board is fastened to the mezzanine board of the server, the optical module establishes Ethernet connections with each of the N Ethernet switching chips, receives Ethernet packets via the Ethernet connections, and transmits the Ethernet packets to other servers; or
at least one optical module that is arranged on both a front side and a back side of any expansion board; or, when more than two optical modules are arranged on both a front side and a back side of any expansion board, these optical modules are placed vertically.

12. A graphics processing unit (GPU) interconnecting device for a server, wherein the server comprises two or more GPUs arranged on a baseboard of the server and is further equipped with N Ethernet switching chips, wherein N is greater than or equal to 1; these N Ethernet switching chips are integrated onto a mezzanine board, the mezzanine board is connected to the baseboard of the server via a designated connector, the designated connector supports a standard Ethernet protocol and is positioned between the mezzanine board and the baseboard; and each of the GPUs in the server establishes an Ethernet connection through the designated connector and the N Ethernet switching chips;
wherein the device (800) comprises: a data packet receiving module (801) and a data packet sending module (802);
the data packet receiving module (801) is to receive, via an Ethernet connection between each of the N Ethernet switching chip and the designated connector, Ethernet packets sent by the designated connector; the Ethernet packets are generated when any GPU in the server, serving as a source GPU, determines that the source GPU needs to transmit data to at least one other GPU in the server, serving as a target GPU; the source GPU encapsulates the data to be transmitted based on a standard Ethernet protocol and sends the Ethernet packets to the designated connector via an Ethernet connection between the source GPU and the designated connector;
the data packet sending module (802) is to send the received Ethernet packets, via an Ethernet connection between each of the N Ethernet switching chip and the designated connector, to the designated connector, so that the designated connector sends the Ethernet packets to the target GPU via an Ethernet connection between the designated connector and the target GPU.

13. The GPU interconnecting device for a server of claim 12, wherein
the number N of Ethernet switching chips is determined based on a number of the GPUs in the server, bandwidth supported by the GPUs, and bandwidth supported by the Ethernet switching chips;
the server further comprises a CPU connecting to the GPUs in the server via a peripheral component interconnect express (PCle) bus, manages the GPUs, and send training data to the GPUs to execute model training; wherein the data to be transmitted is generated during a process of the source GPU training a model based on the training data;
the server further comprises an optical module arranged on an expansion board of the server; wherein the expansion board is fastened to a mezzanine board of the server; the optical module establishes Ethernet connections with each of the N Ethernet switching chips, receives Ethernet packets via the Ethernet connections, and transmits the received Ethernet packets to other servers; or
a front side and a back side of any expansion board of the server are each equipped with at least one optical module, or both a front side and a back side of any expansion board of the server are equipped with two or more optical modules that are vertically arranged.

14. A non-transitory storage medium, storing computer program instructions, wherein the computer program instructions, when executed by a processor, cause the processor to perform the method according to any one of claims 6 to 7 or claims 10 to 11.
